# EUROPÄISCHE PATENTSCHRIFT

(11) **EP 0 746 408 B1**
(45) Veröffentlichungstag und Bekanntmachung des Hinweises auf die Patenterteilung: **23.09.1998**
(21) Anmeldenummer: 95911194.9
(22) Anmeldetag: 23.02.1995
(51) Int. Cl.: B01J 2/00, B01J 13/02, B01J 19/08

(54) **FORMEN VON MIKROPARTIKELN IN ELEKTRISCHEN FELDKAEFIGEN**
SHAPING OF MICROPARTICLES IN ELECTRIC-FIELD CAGES
FORMAGE DE MICROPARTICULES DANS DES CAGES A CHAMPS ELECTRIQUES

(30) Priorität: 24.02.1994 DE 4406041; 29.09.1994 DE 4434883
(43) Veröffentlichungstag der Anmeldung: 11.12.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: FUHR, Günter, D-13127 Berlin (DE); VOIGT, Andreas, D-13051 Berlin (DE); HAGEDORN, Rolf, D-13027 Berlin (DE); SCHNELLE, Thomas, D-10243 Berlin (DE); HORNUNG, Jan, D-13189 Berlin (DE); MÜLLER, Torsten, D-12439 Berlin (DE); FIEDLER, Stefan, D-10179 Berlin (DE); GLASSER, Henning, D-10245 Berlin (DE); WAGNER, Bernd, D-14199 Berlin (DE)
(74) Vertreter: Leonhard, Frank Reimund, Dipl.-Ing.
(86) Internationale Anmeldenummer: DE9500237
(87) Internationale Veröffentlichungsnummer: WO9523020

(56) Entgegenhaltungen:
- WO-A-93/05166
- WO-A-93/11866
- FR-A- 2 345 534
- BIOCHIMICA ET BIOPHYSICA ACTA, Bd. 1157, Nr. 2, 1993 Seiten 127-140, SCHELLE ET AL. 'Three-dimentional electric field traps for manipulation of cells - calculation and experimental verification' in der Anmeldung erwähnt
- BIOCHIMICA ET BIOPHYSICA ACTA, Bd. 1108, Nr. 2, 1992 Seiten 215-223, FUHR ET AL 'Levitation, holding, and rotation of cells within traps made by high-frequency fields' in der Anmeldung erwähnt

## Beschreibung

Die Erfindung betrifft 3-dimensionale Mikroelektrodenanordnungen und Verfahren, um suspendierte Teilchen (Partikeln, Phasen) oder Tropfen einer Flüssigkeit in elektrischen Feldern, vorzugsweise Hochfrequenzfeldern, zu formen und unter Feldeinfluß zu verfestigen. Sie betrifft auch Verwendungsmöglichkeiten der geformten Teilchen.

Zahlreichen Trenntechniken in der Chemie, Medizin oder Biotechnologie liegt das Durchströmen gepackter Volumina von als Filter oder Träger mit erweiterter Funktion dienenden kleinen Partikeln zu Grunde. Verbreitete Anwendung finden dabei z.B. in der Chromatographie sphärische Gelpartikeln (z.B. Sephadex), irreguläre Granulate (Aktivkohlen, Harze, Mischoxide), Extruder-Komprimate (Molsiebe, Katalysatoren) oder Fasern und Hohlfasern (Ullmanns Encyclopedia of Industrial Chemistry, Vol A21, 305-428 (1992) VCH-Publishers Cooperation, sowie eben da Vol B3, 10-1 bis 10-44 (1992)). Auf Grund der für sphärische Mikropartikeln in Abhängigkeit ihrer Größe charakteristischen Lichtbrechungseigenschaften werden solche auch in der Farbenherstellung breit angewendet (z.B. Latex oder mikrosphärische Gläser in lichtreflektierenden Anstrichen). Um bei gegebenem Packungsvolumen immer größere Oberflächen für die Wechselwirkung mit der durchströmenden Flüssigkeit, Gas oder Suspension zu erreichen, werden einerseits immer kleinere Dimensionen (Mikrometerbereich, Submikrometerbereich) der Partikeln angestrebt (Kirk-Othmer, Encyclopedia of Chemical Technology, Vol. 15, 470 -493 (1981) J. Wiley & Sons, New York), oder wird Wert auf ein definiertes Größenspektrum - bis hin zu monodispersen homogenen Gemischen gelegt.

Die Größe der im Mikrometer- und Submikrometerbereich ausschließlich sphärischen Endprodukte lässt sich allein durch die Verfahrensbedingungen der Herstellung streng festlegen oder aber durch nachträgliche Klassierungen einstellen. Letzteres trifft für alle aus Zerkleinerungstechnologien stammenden irregulären Partikeln, jedoch nicht für ihre Form zu. Die Form der Mikropartikeln ergibt sich allein aus der Technologie ihrer Herstellung und ist für alle in Rührreaktoren hergestellte polymeren Materialien und die genannten Gläser durch die Schmelztechniken auf Mikrosphären (Kugeln) begrenzt. Einer gewissen Regelung unterwerfen sich allein die mikrokristallinen Materialien, wobei sich die zu erzielenden Formen aus der Abbildung der stoffspezifischen Kristallebenen ergeben und damit wiederum eingeschränkt sind.

Für viele Anwendungszwecke (Chromatographie, Farbherstellung, Medikamentenherstellung etc.) wäre es sehr vorteilhaft, in ihrer Geometrie in weiten Grenzen bestimmbare und reproduzierbar herstellbare Mikropartikeln zu besitzen, die z.Z. jedoch nur in Einzelfällen mit ausreichender Variabilität der Geometrie und Struktur herstellbar sind.

Daß elektrische Felder zum Sammeln von Partikeln und Zellen in flüssigen Medien genutzt werden können, wurde von POHL bereits 1978 in einer Monographie beschrieben (POHL, H.P., Dielectrophoresis, Cambridge Press, Cambridge 1978). Er und nachfolgende Autoren (z.B. T.B. JONES, J. Electrostatics 18, 55-62 (1986) u.a.) nutzten dafür zumeist makroskopische Elektrodenanordnungen. Ein Formen von Körpern war unter diesen Umständen nicht möglich.

Einen entscheidenden Schritt bedeutete die Entwicklung von hochfrequenten Feldkäfigen auf der Basis von Mikroelektroden, die mit den Technologien der Halbleiterherstellung produziert wurden (T.SCHNELLE et al. Biochim.Biophys.Acta 1157, 127-140 (1993)). Sie dienten dem Fangen und der Manipulation von Zellen und kleinsten Teilchen in Mikrokanal- und Reaktionssystemen und basieren auf den makroskopischen Feldkäfigen, wie sie aus der Elementarteilchenphysik bekannt sind (W.PAUL et al., Forschungsberichte des Wirtschaftsministeriums Nordrhein-Westfalen, Nr. 145 und Nr. 450 (1958)). Es konnte auch gezeigt werden, daß kleine Partikeln, wie z.B. Latexkugeln einer Größe von einigen Mikrometern; z.B. 3.4 µm oder 9.9 µm) in freier Lösung mittels negativ dielektrophoretischer Kräfte zu Aggregaten gesammelt werden und daß diese je nach Ansteuerung des Feldes eine andere Form annehmen (G.FUHR et al. Biochim.Biophys.Acta 1108, 215-223 (1992)). Nach Abschalten des Feldes zerfallen dieses Gebilde jedoch.

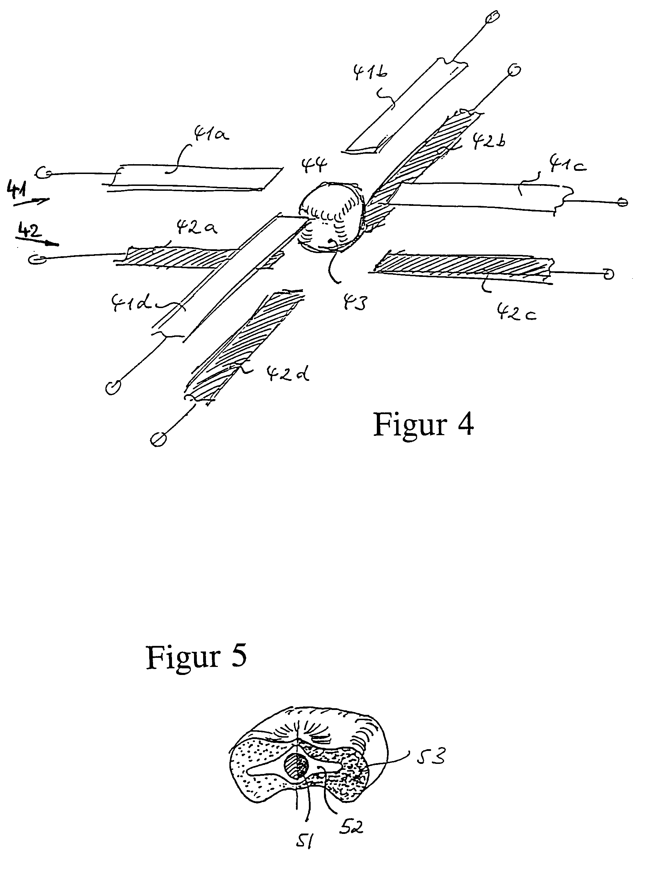

Besonders die zuvor erwähnte BBA 1157, Seiten 127-140, 1993 soll herausgegriffen werden und ihrem Inhalt nach deutlich dargelegt werden. In den dortigen Figuren 5A bis 5C werden Oktupol-Käfige gezeigt, die eine Kantenlänge von 100µm haben. Sie bilden einen Raum, in dem Latex-Teilchen gesammelt und zu einem losen - Teilchen an Teilchen liegenden - Verbund zusammengedrückt werden. Dieser Verbund verliert aber seine Form völlig, wenn das Kraftfeld der dielektrophoretischen Kräfte abgeschaltet wird. Speziell auf Seite 139 (rechte Spalte, Zeilen 5/8) wird dort vorgeschlagen, diese Strukturen in komplexeren Geräten (more complex devices) zu verwenden.

Gegenüber dem Stand der Technik liegt der vorliegenden Erfindung die **Aufgabe** zugrunde, Mikropartikeln und/oder Flüssigkeitstropfen in einer Umgebungslösung mittels elektrischer Felder so zu sammeln und dauerhaft zu verformen. Das wird mit der technischen Verfahrenslehre des Anspruchs 1 erreicht. Ebenso erreicht dies die Vorrichtung gemäß Anspruch 39 zur Durchführung des Verfahrens. In dem Verfahren und der Vorrichtung könne Viren oder Makromoleküle verwendet werden (Anspruch 21). Die Ausgangsprodukte finden vorteilhafte Einsatzgebiete in den technischen Gebieten der Ansprüche 21, 22, 23. Auch können sie als Partikel für Filtersysteme, als Partikel für chromatografische Trenntechnik verwendet werden.

Auch nach dem Abschalten des Feldes und Entnehmen aus dem Feldkäfig behalten die mikrokraftgeformten Gebilde (Körper) ihre Form weitgehend bei und können ähnlich oder wie ein Festkörper behandelt werden, so z.B. als nachgebildete Blützelle (Anspruch 24), mit einer an den Flächen eingedrückten Scheibenform. Die abhängigen Ansprüche ergänzen die abstrakten - von Anspruch 1, 39 in tragenden Merkmalen umrissenen - Gedanken der elektrisch steuerbaren Formung eines Partikelaggregates oder einer Flüssigkeitsmenge mit Hilfe von dreidimensional angeordneten Mikroelektroden und der chemischen und/oder physikalischen Verfestigung des Gebildes unter Feldeinfluß.

Mittels im Mikrometer- oder Submikrometerbereich (unterhalb 1µm) 3-dimensional angeordneten, einen mit einer Flüssigkeit füllbaren Reaktionsraum umschließenden, jedoch diesen nicht vollständig begrenzenden, Mikroelektroden, werden starke elektrische Feldgradienten gebildet, die einen Feldkäfig bilden. In diesem Feldkäfig lassen sich bei Applikation von Signalfrequenzen im kHz- bis GHz-Bereich Mikropartikeln oder Flüssigkeitstropfen einer zweiten oder mehrerer, mit der ersten nicht oder nur teilweise mischbaren Flüssigkeit fangen und/oder zu größeren Gebilden vereinigen. Die Teilchen oder Tropfen haben eine niedrigere Leitfähigkeit und/oder relative Dielektrizitätskonstante im Vergleich zum Umgebungsmedium. Sie werden dann von den Elektroden auch bei Wechselstrombeschaltung abgestoßen (negative Dielektrophorese) und sammeln sich in Feldminima, die in der Regel in der freien Lösung liegen. Dort nehmen die Partikelaggregate oder Tropfen je nach Amplitude, Frequenz und Phasenlage der Wechselsignale, aber auch in Abhängigkeit von der Geometrie und Lage der Elektroden steuerbare Formen an.

In Ausnahmefällen (extrem wenig leitfähige Flüssigkeiten) werden niedrige Frequenzen bzw. Gleichstrom verwendet.

Erfindungsgemäß wird unter der Wirkung der Felder die Aggregation sowie Vermehrung der Partikeln oder die Verfestigung von Tropfen induziert, was auf chemischem Weg (z.B. Polymerisation, Zwei- oder Mehrkomponentensysteme) oder physikalischem Weg (z.B. Abkühlen, Kristallisation) erfolgen kann. Da das gebildete Partikel keine Elektrode berührt, sondern durch das Feld frei in der Umgebungslösung schwebend gehalten wird, kann es nach Formung und Verfestigung leicht aus dem Elektrodenraum entnommen werden.

Mit der Erfindung können entsprechende Partikeln auch im Submikrometerbereich (kleiner 1µm) geformt werden. Die Größe der Teilchen hängt vor allem von der Ausführung (Geometrie, Anordnung) der sie formenden Elektroden ab. Für entsprechend kleine Teilchen müssen die Elektroden ebenfalls entsprechend klein (im Submikrometerbereich) liegen. Die Elektroden können allerdings um den Faktor 2 bis 10 größer sein als das zu formende Teilchen. Sie können auch entsprechend beabstandet sein. Je kleiner die Geometrie der Elektroden gewählt ist, desto geringer ist die Gefahr von Elektrolyse oder Elektrodenauflösung, so daß auch mit sehr leitfähigen Umgebungslösungen (beispielsweise Saugerzellenkulturen) gearbeitet werden kann. Vorteilhaft tritt hinzu, daß die auftretende Wärme besser abgeführt werden kann.

Es wird damit möglich, lebende Zellen in hochleitfähigen Medien, wie tierischen Zellkulturmedien, zu Homo- oder Hetero-Aggregaten zu formen oder zu umhüllen.

Wenn mehrere Feldkäfigsysteme nebeneinander angeordnet (aneinandergereiht) werden, lassen sich auch kompliziert vernetzte und langgestreckte oder filigran einen Raum durchsetzende Teilchensysteme erzeugen (Anspruch 40).

Die Elektroden können mit Techniken der Halbleiterherstellung erzeugt werden (Anspruch 11). Sie sind zumeist flach und auf einen Träger elektroplatiert. Eine verwendbare Dicke ist 0.5 µm, verwendbare Träger sind z.B. Quarzglas oder Halbleitermaterialien. Der dreidimensionale Zusammenbau kann durch Mikromanipulatoren erfolgen.

Stehen die Elektroden nur in einem kleinen Bereich mit der Teilchensuspension (Umgebungslösung) in direktem Kontakt (Anspruch 8), können hochleitfähige Lösungen/Suspensionen verwendet werden (z. B. die physiologische Nährlösung DMEM).

Bei geringen Leitfähigkeiten der Lösung und bei größeren Elektroden können diese auch ganz bedeckt sein (Anspruch 9).

Typische Abmessungen der Partikeln oder dispergierten Phasen liegen in wenigstens zwei Dimensionen (Größenordnungen) von Mikrometer- oder im Submikrometerbereich.

Bevorzugte Ausführungs**beispiele** der Erfindung werden nachfolgend unter Bezugnahme auf die beiliegenden Figuren näher erläutert.

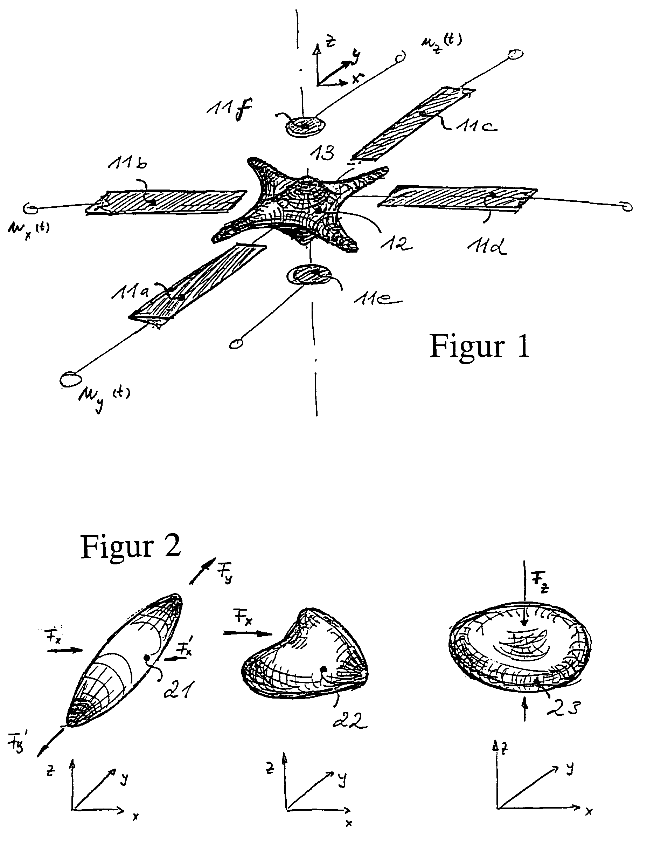

**Figur 1** veranschaulicht die Partikelformung und eine mögliche Anordnung von Elektroden 11. Im dargebotenen Beispiel sind die Elektroden in drei Ebenen angeordnet. In der obersten Ebene befindet sich die Elektrode 11f, darunter in einer Quadrupolanordnung die Elektroden 11a,11b,11c und 11d und in der unteren Ebene die Elektrode 11e. Die räumliche Anordnung der Elektroden 11 bildet einen Reaktionsraum.

Die Elektroden 11e und 11f werden mit einer Wechselspannung u_{z}(t) beaufschlagt, an die Elektroden 11a bis 11d wird ein rotierendes Feld (uₓ(t), u_{y}(t)) angelegt. Entweder über Zuführungskanäle oder seitlich zwischen die Elektroden kann eine Flüssigkeit 13 (im folgenden "Umgebungslösung" genannt) eingespült werden, in der sich kleine Partikeln, Zellen oder Gasblasen oder Tröpfchen einer weiteren flüssigen Phase suspendieren lassen. Durch geeignete Wahl der Dielektrizitätskonstante und/oder der spezifischen Leitfähigkeit der Partikeln 12 und der Umgebungslösung 13 kann erreicht werden, daß abstoßende Polarisationskräfte auftreten (immer dann, wenn die Leitfähigkeit oder die Dielektrizitätskonstante der Partikeln bei einer gegebenen Frequenz kleiner als die der Umgebungslösung ist). Die Teilchen oder Tropfen 12 werden dann bei Feldstärken größer 1 kV/m in den Zentralteil des Reaktionsvolumens 13 ("Reaktionsraum") fokussiert und je nach Ansteuerungsart der Elektroden 11 zu einem nichtsphärischen Körper 12 verformt, der diese Form bei Anlassen des Feldes auch beibehält.

Hat der Körper die gewünschte Größe und Form erreicht, wird über einen chemischen Vorgang (z.B. Photopolymerisation) oder physikalischen Prozess (z.B. Abkühlung) der geformte Körper gehärtet und anschließend aus dem Reaktionsraum ausgespült. Nachdem die Abmessungen der Elektroden 11 und ihr Abstand im Mikrometer und vor allem auch Submikrometerbereich gewählt werden, entstehen geformte Mikropartikeln 12 einer Größe in eben diesem Bereich.

**Figur 2** veranschaulicht verschiedene Formen von Mikropartikeln, wie sie in Feldkäfigen erzeugt werden können. Eine Spindel 21 entsteht, wenn 11f und 11e nur schwach angesteuert werden (geringere Amplitude als an 11a bis 11d). Ein herzförmiges Gebilde 22, ist z.B. erreichbar durch Amplitudenerhöhung an der Elektrode 11b. Eine an den Flächen eingedellte Scheibe, ähnlich der Form eines menschlichen Erythrocyten (rotes Blutkörperchen), wird durch Erhöhung der Amplitude an 11e und 11f gegenüber 11a bis 11d und geringerem ursprünglichem Materialeinsatz erhalten. Ein Senken der Amplitude an 11e, 11f ergibt das in Figur 1 gezeigte Partikel 12. Die jeweils besonders hervorgehobenen Kräfte Fₓ, F_{y} F_{z} sind entsprechend dem Koordinatensystem der Figur 1 eingezeichnet.

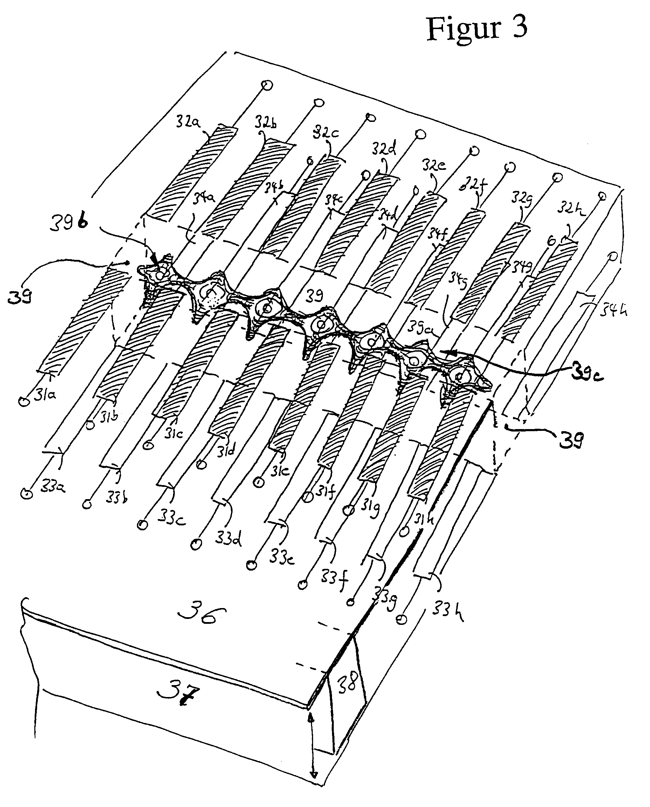

**Figur 3** zeigt eine Anordnung von Elektrodenreihen 31a bis 31h, 32a bis 32h, 33a bis 33h und 34a bis 34h in zwei Ebenen 36, 37, die einen Kanal 39 begrenzen und in ihm aneinandergereihte Oktupol-Feldkäfige bilden. Beide Ebenen 36, 37 haben einen Abstand, der der Spaltbreite der Elektrodenreihen 31 und 32 entspricht. Ein Spacer 38 kann diesen Abstand dauerhaft fixieren. Es handelt sich um eine Anordnung, wie sie in der Technologie der Halbleiter-Hybridherstellung Anwendung findet. In den Kanal 39 wird eine Umgebungslösung 39a und eine Teilchenfraktion oder Phase 39b gegeben, die bei ausreichender Materialzugabe wie in Figur 2 angegeben verformt und verknüpft werden kann. Während oder nach der Härtung läßt sich das geformte Band 39b kontinuierlich oder diskontinuierlich aus dem Kanal 39 entfernen.

**Figur 4** zeigt eine Oktupolanordnung 41, 42 mit jeweils vier Elektroden in 2 Ebenen (41a bis 41d und 42a bis 42d). Diese Anordnung läßt sich sehr leicht bis zu Submikrometergröße (Breite, Höhe, Abstand) der Elektroden auf Siliziumwafern herstellen. Es können alternierende oder rotierende Felder angelegt werden bis zu Frequenzen im oberen MHz-Bereich. Analog zu Figur 1 werden Körper 43 im Reaktionsraum 44 geformt und gehärtet.

**Figur 5** verdeutlicht als Sektorschnitt den Aufbau eines geformten Körpers, bei dem zuerst der Innenkörper 51 gebildet und verhärtet wurde (Kugel), danach mit anderer Ansteuerung eine erste Umhüllung 52 und eine weitere Hülle mit wieder anderer Geometrie 53. Diese Hülltechnik kann weiter fortgesetzt werden. Anwendungsmöglichkeiten dieser Form liegen beispielsweise in der Medikamentendosierung.

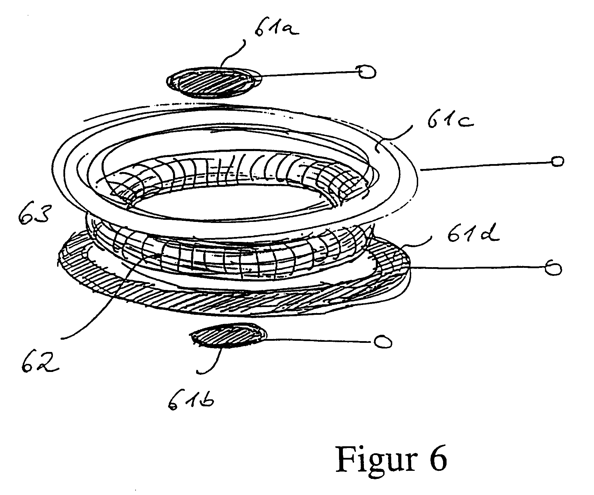

**Figur 6** zeigt eine Elektrodenanordnung 61 zum Formen eines mikrotoroiden Partikels 62 im Reaktionsraum 63. Benötigt werden die Elektroden 61a und 61b zum Formen des Ringes und die Ringelektroden 61c und 61d zu dessen Stabilisierung. Die Elektroden 61a bis 61d sind in vier parallelen Ebenen angeordnet. Bei symmetrischem Torus 62 - der zu formen ist - sind die Elektroden 61a, 61b in der Achse der Ringelektroden 61c, 61d angeordnet und abhängig von der Feldstärke und Frequenz an den Elektroden 61a, 61b ist der Abstand oberhalb der Elektrode 61c und unterhalb der Elektrode 61b gewählt.

Angesteuert wird mit Wechselspannungen.

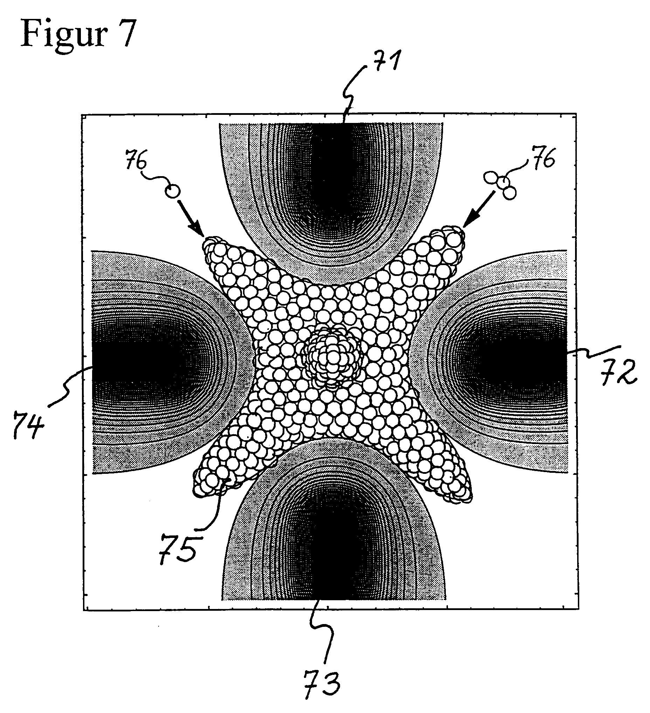

**Figur 7** ist ein Schema, wie die Kräfte in den gezeigten Oktupolkäfigen auf die zu formenden Partikel wirken. Dargestellt ist die Mittelebene beispielsweise des Käfigs 11a, 11b, 11c, 11d der **Figur 1**; ebenso könnte es aber auch ein Schnitt in einer Ebene senkrecht zur Kanalerstreckung 39 der Figur 3 sein. Die Elektroden sind in Figur 7 mit 71-74 bezeichnet, wobei der schwarze Kern die eigentlichen Elektroden darstellt und sie umgebend Linien gleicher Kraft (Feldlinien) den Verlauf und die Richtung der auf das Partikel 75 wirkenden Kräfte veranschaulicht. Das Partikel 75 ist hier als Partikelaggregat gezeigt, das durch Zugabe weiterer Partikel 76 (an den Sternenden) wächst und in konvexen Bereich (zwischen den Sternenden) durch Krafteinwirkung geformt wird.

Die Kraftlinien schirmen die Elektroden 71-74 ab, so daß das Parikelaggregat 75 die eigentliche (metallische) Elektrode nicht berührt, also schwebend - von Kraftlinien gehalten - im Raum bzw. der Umgebungsflüssigkeit gehalten wird.

## Patentansprüche

1. **Verfahren** zum Formen von Mikropartikeln aus Flüssigkeiten, Gelen oder Festkörpern, bei dem
- einzelne oder in Gruppen ansteuerbare Elektroden (11a,11b, 11c,11d,11e,11f;31;32,33,34;42,41;61;71,72,73,74) mit einer Breite, Höhe und einem Abstand im Mikrometerbereich, insbesondere Submikrometerbereich räumlich angeordnet sind;
- die Elektroden einen mit einer Umgebungsflüssigkeit (13,39a) füllbaren Reaktionsraum (39,44,63) bilden und mit variierenden elektrischen Spannungen beaufschlagt werden;
- wobei sich in der Umgebungsflüssigkeit (13,39a) kleine Partikeln (12,21,22,23,43,62), Partikelaggregate (75) oder mindestens eine dispergierte Phase (39b) befinden, deren relative Dielektrizitäts-Konstante und/oder spezifische Leitfähigkeit bei gewählter elektrischer Ansteuerung der Elektroden geringer als die der Umgebungsflüssigkeit ist;
- die von den Elektroden (11;31-34;41,42;61;71-74) auf die Partikeln, Partikelaggregate oder dispergierte Phase wirkenden Kräfte so eingestellt werden, daß erstere in der Umgebungsflüssigkeit "schwebend" in ihrer Form verändert und - insbesondere während der elektrischen Ansteuerung der Elektroden - vernetzt, gehärtet oder verfestigt oder als Homo- oder Hetero-Aggregate dauerhaft formfixiert werden.

2. Formen von Mikropartikeln nach Anspruch 1, **dadurch gekennzeichnet**, daß der Körper mittels einer chemischen Reaktion verfestigt wird, die insbesondere von außen über optische Anregung, Zugabe von Substanzen oder Elektropolymerisation zeitlich gesteuert wird.

3. Formen von Mikropartikeln nach Anspruch 1, **dadurch gekennzeichnet**, daß der Körper mittels einer physikalischen Veränderung, wie Abkühlen oder Kristallisation, verfestigt wird.

4. Formen von Mikropartikeln nach Anspruch 1 bis 3,
**dadurch gekennzeichnet**,
daß zwei oder mehrere Tröpfchen verschiedener Zusammensetzung in der Art eines Mehrkomponentensystems miteinander reagieren und eine Verfestigung ergeben.

5. Formen von Mikropartikeln nach Anspruch 1 bis 4,
**dadurch gekennzeichnet**,
daß gleichartige oder unterschiedliche Mikropartikeln in geordneter oder ungeordneter Form im Kraftfeld des Reaktionsraüms zu Aggregaten geformt und formfixiert werden.

6. Formen von Mikropartikeln nach einem der Ansprüche 1 bis 5,
**dadurch gekennzeichnet**,
daß mehrere Partikeln in verschiedenen Feldkäfigen nebeneinander gebildet werden oder durch Zugabe weiteren Materials miteinander unter Feldeinfluß verbunden werden.

7. Formen von Mikropartikeln nach einem der Ansprüche 1 bis 6,
**dadurch gekennzeichnet**,
daß von den Elektroden (11;31-34;41,42;61;71-74) ein wanderndes, d.h. auch rotierendes elektrisches Feld - insbesondere hochfrequente Felder im kHz-, MHz-, GHz-Bereich - erzeugt werden.

8. Formen von Mikropartikeln nach einem der Ansprüche 1 bis 7,
**dadurch gekennzeichnet**,
daß die Elektroden nur partiell mit der Teilchensuspension in Kontakt stehen und der Restbereich der Elektroden mit einer Isolierschicht bedeckt ist.

9. Formen von Mikropartikeln nach einem der Ansprüche 1 bis 8,
**dadurch gekennzeichnet**,
daß die Elektroden auch im Käfigbereich mit einer isolierenden Schicht einer Dicke im Submikrometer- oder Mikrometerbereich bedeckt sind.

10. Formen von Mikropartikeln nach einem der Ansprüche 1 bis 9,
**dadurch gekennzeichnet**, daß einige oder alle
Elektroden (11;31-34;41;42;61;71-74) elektronische Bauelemente, wie Transistoren oder Dioden, sind oder von solchen Bauelementen angesteuert werden.

11. Formen von Mikropartikeln nach einem der Ansprüche 1 bis 10,
**dadurch gekennzeichnet**, daß die 3-dimensionale Anordnung der Elektroden (11;31;41;61;71), ein Zuführungskanal und der Reaktionsraum (39,44,63) mit den Technologien der Halbleiterstrukturierung erzeugt werden.

12. Formen von Mikropartikeln nach einem der Ansprüche 1 bis 11,
**dadurch gekennzeichnet**, daß nacheinander Material gleicher oder unterschiedlicher Zusammensetzung in den Reaktionsraum (39,44) gegeben und dem bereits gebildeten und/oder verfestigten Körper (21,22,23;75) angefügt wird, bzw. diesen ein oder mehrfach umhüllt (51,52,53).

13. Formen von Mikropartikeln nach Anspruch 12, **dadurch gekennzeichnet**, daß jeweils während oder nach der erneuten Materialzugabe die Ansteuerung der Elektroden geändert wird und somit die aufgebrachte Schicht eine andere Hüllform (52,53) als der Grundkörper (51) annimmt.

14. Formen von Mikropartikeln nach einem der Ansprüche 1 bis 13, **dadurch gekennzeichnet**, daß in den formbaren Grundkörper (51) Festkörper, Tropfen, lebende Zellen oder gasgefüllte Hohlräume eingefügt werden oder an seiner Oberfläche anhaften.

15. Formen von Mikropartikeln nach einem der Ansprüche 1 bis 14,
**dadurch gekennzeichnet**, daß der geformte Körper (12,21-23;39c,39b) nur partiell, insbesondere oberflächlich, verfestigt wird.

16. Formen von Mikropartikeln nach einem der Ansprüche 1 bis 15, **dadurch gekennzeichnet**, daß soviel Material zugegeben wird oder die Elektroden so angesteuert werden, daß der geformte Körper (75,76) aus dem eigentlichen Reaktionsraum (39,44), der von den vorderen Bereichen der Elektroden (71-74) festgelegt wird, herausragt.

17. Formen von Mikropartikeln nach einem der Ansprüche 1 bis 16, **dadurch gekennzeichnet**, daß der geformte Körper (12) nicht vollständig im Feld der Elektroden (11) verfestigt wird, um ihn über elastische und/oder plastische Deformation aus dem Reaktionsraum (13,44) entfernen zu können, und außerhalb weiteren Bearbeitungen, insbesondere Verfestigungen, unterworfen wird.

18. Formen von Mikropartikeln nach einem der Ansprüche 1 bis 17, **dadurch gekennzeichnet**, daß eine Gasblase durch Zugabe einer weiteren Phase umhüllt und stabilisiert wird.

19. Formen von Mikropartikeln nach einem der Ansprüche 1 bis 18, **bei dem**
(a) lebende, sich im Feldkäfig teilende und wachsende, immobilisierte oder tote Zellen zu Aggregaten über Oberflächenbindungen daüerhaft verbunden werden; oder
(b) lebende Zellen mit einer weiteren oder mehreren Phasen zu einem Aggregat dauerhaft verbunden oder umhüllt werden, wobei insbesondere die Umhüllung partiell sehr dünn, für kleinste Moleküle permeabel oder durchbrochen ist.

20. Formen von Mikropartikeln nach einem der Ansprüche 1 bis 19 **dadurch gekennzeichnet**, daß Viren oder Makromoleküle zur elektrodenbeeinflußten Formung von Aggregaten verwendet werden.

21. Verwendung von nach einem der Ansprüche 1 bis 20 geformten Mikropartikeln als Implantat in Bioreaktoren, extrakorporalen Systemen oder zur Herstellung eines pharmakologischen Depotpräperats.

22. Verwendung von nach einem der Ansprüche 1 bis 20 geformten Mikropartikeln zur Herstellung eines pharmakologischen Dosiersystems, insbesondere von kompletten Mikrotabletten oder -pillen oder Bestandteilen davon.

23. Verwendung von nach einem der Ansprüche 1 bis 20 geformten Mikropartikeln aus Flüssigkeiten, Gelen, Festkörpern oder Gasen als Farben-Pigment.

24. ***Geometrisch geformtes Mikropartikel**, das schalenförmig oder kompartimentiert ist, erhältlich nach einem Verfahren der Ansprüche 1 bis 20, dadurch gekennzeichnet, daß das Partikel (23) kleiner oder gleichgroß wie eine Zelle des Blutes ist, und deren Geometrie in Gestalt einer an den Flächen eingedrückten Scheibe nachbildet.*

25. Verfahren zum Formen von Mikropartikeln nach einem der Ansprüche 1 bis 20, dadurch gekennzeichnet, daß die Formgebung in Umgebungslösungen erfolgt, die bei Temperaturen unter 0°C und über 100°C flüssig sind.

26. Formen von Mikropartikeln nach einem der Ansprüche 1 bis 20, 25, **dadurch gekennzeichnet,** daß die einzelnen Umgebungslösungen über Mikrokanäle in den Reaktionsraum (39,44) und aus ihm heraus geführt werden.

27. Formen von Mikropartikeln nach einem der Ansprüche 1 bis 20, 25, 26, **dadurch gekennzeichnet,** daß in einem Kanal (39) eine Partikelkette (39a,39c) vorgebbarer Länge gebildet wird.

28. Verfahren nach einem der Ansprüche 1 bis 19, 25 bis 27, **bei dem** die Mikropartikeln asymmetrisch oder durchbrochen geformt werden.

29. Verfahren zum Formen von Mikropartikeln nach einem der Ansprüche 1 bis 20, 25 bis 28, dadurch gekennzeichnet, daß die geformten Partikeln durch einen oder mehrere Feldimpulse, appliziert über zwei oder mehrere Elektroden während oder nach der Härtung verformt und/oder dielektrisch durchschlagen werden.

30. Formen von Mikropartikeln nach einem der Ansprüche 1 bis 20, 25 bis 29, dadurch gekennzeichnet, daß eine Flüssigkeit verwendet wird, die sich erst im Reaktionsraum entmischt und/oder in verschiedene Phasen zerfällt.

31. Formen von Mikropartikeln nach Anspruch 30, dadurch gekennzeichnet, daß die Entmischung über die Elektroden induziert wird, insbesondere durch Ultraschall oder elektrische Felder.

32. Formen von Mikropartikeln nach einem der Ansprüche 1 bis 20, 25 bis 31, **dadurch gekennzeichnet,** daß zeitweise oder durchgängig bei erhöhtem oder erniedrigtem Druck geformt wird.

33. Formen von Mikropartikeln nach einem der Ansprüche 1 bis 20, 25 bis 32, dadurch gekennzeichnet, daß ein geformter Körper durch Zugabe von Material, Abätzen oder Ablatieren auf eine definierte Masse gebracht wird.

34. Formen von Mikropartikeln nach einem der Ansprüche 1 bis 20, 25 bis 33, dadurch gekennzeichnet, daß durch zusätzliche Kräfte, z.B. eine Flüssigkeitsströmung, der Körper weiter deformiert wird.

35. Formen von Mikropartikeln nach einem der Ansprüche 1 bis 20, 25 bis 34, dadurch gekennzeichnet, daß während des Formungs- und/oder des Verfestigungsprozesses die Umgebungsflüssigkeit verändert oder ausgetauscht wird.

36. Formen von Mikropartikeln nach einem der Ansprüche 1 bis 20, 25 bis 35, dadurch gekennzeichnet, daß geformte und weitere Partikeln über die Elektrodenansteuerung orientiert, positioniert und in vorgegebener Form aggregiert und verfestigt werden.

37. Formen von Mikropartikeln nach einem der Ansprüche 1 bis 20, 25 bis 36, dadurch gekennzeichnet, daß
(a) den Wechsel-Elektrodensignalen ein Gleichspannungsanteil überlagert wird;
(b) die Signale gemäß (a) während der Formung zeitweise abgeschaltet werden.

38. Formen von Mikropartikeln nach einem der Ansprüche 1 bis 20, 25 bis 37, **dadurch gekennzeichnet,**
daß das Teilchen von außen oder durch die Elektrodenansteuerung zum Schwingen gebracht wird und in diesem Zustand verfestigt wird.

39. **Vorrichtung** zum Formen von Mikropartikeln nach einem der erwähnten Verfahrensansprüche, **gekennzeichnet durch** eine mehr als zwei elektrisch aktivierbare Elektroden-Mehrpole (31a,32a,33a,34a) aufweisende, langgestreckte Reaktionskammer (13,39,44,63) zur Erzeugung bandförmiger Mikrogebilde (39a,39b), wobei die jeweiligen Elektroden-Mehrpole entlang der langgestreckten Reaktionskammer (39) jeweils in einer senkrecht zur Kammererstreckung verlaufenden Ebene angeordnet sind.

40. Vorrichtung nach Anspruch 39, bei der entlang der Erstreckung der langgestreckten Reaktionskammer (39) auf mindestens zwei Seiten davon Elektrodengebilde (31,32;31,33;33,34;34,32) im Submikrometerbereich vorgesehen sind.

41. Vorrichtung nach Anspruch 39 oder 40, bei der jeder der aufgereihten Elektroden-Mehrpole ein Quadrupol ist.

## Claims

1. **A process** for the formation of microparticles from liquids, gels or solid bodies, in which
- electrodes (11a, 11b, 11c, 11d, 11e, 11f; 31; 32, 33, 34; 42, 41; 61; 71, 72, 73, 74), controllable individually or in groups with a width, height and a distance apart in the micrometer region, especially the submicrometer region are arranged spatially;
- the electrodes form a fillable reaction space (39, 44, 63) with a surrounding liquid (13, 39a) and are subjected to varying electrical voltages;
- whereby small particles (12, 21, 22, 23, 43, 62), particle aggregates (75) or at least a dispersed phase (39b) are present in the surrounding liquid (13, 39a), whose relative dielectric constants and/or specific conductivities with selected electrical activation of the electrodes is less than that of the surrounding liquid;
- the effective forces on the particles, particle aggregates or dispersed phases from the electrodes (11; 31-34; 41, 42; 61; 71-74) are adjusted such that the former "hovering" in the surrounding liquid are changed in form and - especially during the electrical activation by the electrodes - interlaced, hardened or consolidated, or durably form-fixed as homo- or hetero- aggregates.

2. The formation of microparticles according to claim 1, **characterised in that** the bodies are consolidated by means of a chemical reaction, which especially is controlled in time from outside by optical stimulation, the addition of substances or electropolymerisation.

3. The formation of microparticles according to claim 1, **characterised in that** the bodies are consolidated by a physical change, such as cooling or crystallisation.

4. The formation of microparticles according to claims 1 to 3,
**characterised in that**
two or more drops of different composition react with each other like a multicomponent system and result in a consolidation.

5. The formation of microparticles according to claims 1 to 4,
**characterised in that**
similar types or different microparticles in ordered or disordered form are formed in the force field of the reaction space and fixed in form.

6. The formation of microparticles according to claims 1 to 5,
**characterised in that**
several particles are formed alongside each other in different field cages or are joined together by the addition of further material under the influence of the field.

7. The formation of microparticles according to claims 1 to 6,
**characterised in that**
a wandering, i.e. also rotating electric field - especially high frequency fields in the kHz, MHz, GHz ranges - is generated by the electrodes (11; 31-34; 41, 42; 61; 71-74).

8. The formation of microparticles according to claims 1 to 7,
**characterised in that**
the electrodes are only in partial contact with the particle suspension and the remaining area of the electrodes is covered with an insulating layer.

9. The formation of microparticles according to claims 1 to 8,
**characterised in that**,
the electrodes are also covered in the cage area with an insulating layer in the submicrometer or micrometer range.

10. The formation of microparticles according to claims 1 to 9, **characterised in that** some or all of the electrodes (11; 31-34; 41; 42; 61; 71-74) are electronic components, such as transistors or diodes or are excited by such components.

11. The formation of microparticles according to claims 1 to 10, **characterised in that** the three dimensional arrangement of the electrodes (11; 31; 41, 61; 71), a feed channel and the reaction space (39, 44, 63) are produced using the technologies of semiconductor structuring.

12. The formation of microparticles according to claims 1 to 11, **characterised in that**, one after the other, materials of the same or different composition are added to the reaction space (39, 44) and are joined to the already formed and/or the consolidated body (21, 22, 23; 75), or envelope these, singly or in multiples (51, 52, 53).

13. The formation of microparticles according to claim 12, **characterised in that** in each case during or after the renewed addition of material the excitation of the electrodes is changed and thus the applied layer takes on a different form of envelope (52, 53) from the basic body (51).

14. The formation of microparticles according to one of the claims 1 to 13, **characterised in that** solid bodies, droplets, living cells or gas-filled hollow spaces are inserted into the plastics material basic body (51), or attach to its surface.

15. The formation of microparticles according to one of the claims 1 to 14, **characterised in that** the formed body (12, 21-23; 39c, 39b) is only partially, especially superficially, consolidated.

16. The formation of microparticles according to one of the claims 1 to 15,
**characterised in that** so much material is added or the electrodes are excited such that the body formed (75, 76) emerges out from the actual reaction space (39, 44), which is established by the forward regions of the electrodes (71-74).

17. The formation of microparticles according to one of the claims 1 to 16,
**characterised in that** the formed body (12) is not fully consolidated in the field of the electrodes (11), so as to be able to separate itself from the reaction space by elastic and/or plastic deformation, and is subjected to further processing, especially consolidation.

18. The formation of microparticles according to one of the claims 1 to 17,
**characterised in that** a gas bubble is enveloped and stabilised by the addition of a further phase.

19. The formation of microparticles according to one of the claims 1 to 18, **in which**
(a) cells, living, dividing and growing within the field cage, immobilised or dead cells are durably joined to aggregates by surface connections; or
(b) living cells with a further or several phases are durably joined to an aggregate or enveloped, whereby especially the envelopment is partially very thin, permeable by the smallest molecules, or is pierced.

20. The formation of microparticles according to one of the claims 1 to 19,
**characterised in that** viruses or macromolecules are used for the electrode controlled formation of aggregates.

21. The use of microparticles formed in accordance with one of the claims 1 to 20 as implants in bioreactors, extracorporeal systems or for the production of a pharmacological deposition source.

22. The use of microparticles formed in accordance with one of the claims 1 to 21 for the production of a pharmacological dosing system, especially of complete microtablets or pills or components thereof.

23. The use of microparticles formed in accordance with one of the claims 1 to 20 from liquids, gels, solid bodies or gases as colour pigments.

24. ***A geometrically formed microparticle**, which is shell-shaped or compartmented, obtainable from a process according to claims 1 to 20, characterised in that the particle (23) is smaller than or of the same size as a blood cell, and whose geometry is produced in the form of a disc pressed in at the surfaces.*

25. A process for forming microparticles according to one of the claims 1 to 20, characterised in that, the formation is effected in surrounding solutions, which are liquid at temperatures of below 0°C and greater than 100°C.

26. A process for forming microparticles according to one of the claims 1 to 20, 25, **characterised in that**
the individual surrounding solutions are taken into the reaction space (39, 44), and out of it, via microchannels.

27. A process for forming microparticles according to one of the claims 1 to 20, 25, 26, **characterised in that a** particle chain (39a, 39c) of predetermined length is formed in a channel (39).

28. A process according to one of the claims 1 to 19, 25 to 27, **in which** the microparticles are formed asymmetrically or perforated.

29. A process according to one of the claims 1 to 20, 25 to 28, characterised in that the formed particles are deformed and/or dielectrically broken down by one or more field pulses, applied via two or more electrodes during or after hardening.

30. The formation of microparticles according to one of the claims 1 to 20, 25 to 29, characterised in that a liquid is employed, which dissociates only in the reaction space and/or decomposes into different phases.

31. The formation of microparticles according to claim 30, characterised in that the dissociation is induced by the electrodes, especially by ultrasound or electrical fields.

32. The formation of microparticles according to one of the claims 1 to 20, 25 to 31, **characterised in that** the formation is effected with periodically or continuously increased or lowered pressure.

33. The formation of microparticles according to one of the claims 1 to 20, 25 to 32, characterised in that a formed body is brought to a defined size by the addition of material, etching away or ablation.

34. The formation of microparticles according to one of the claims 1 to 20, 25 to 33, characterised in that the body is further deformed by additional forces, e.g. a flow of liquid.

35. The formation of microparticles according to one of the claims 1 to 20, 25 to 34, characterised in that during the forming or consolidation process the surrounding liquid is changed or exchanged.

36. The formation of microparticles according to one of the claims 1 to 20, 25 to 35, characterised in that formed and other particles are oriented, positioned and aggregated in a prescribed form and consolidated by the activation of the electrodes.

37. The formation of microparticles according to one of the claims 1 to 20, 25 to 36, characterised in that
(a) a direct current level is superimposed on the alternating electrode signals;
(b) the signals according to (a) are periodically switched off during forming.

38. The formation of microparticles according to one of the claims 1 to 20, 25 to 37, **characterised in that**
the particle is brought into oscillation from outside or by the excitation of the electrodes and is consolidated in this condition.

39. **An arrangement** for the formation of microparticles according to one of the quoted process claims, **characterised by** a reaction chamber (13, 39, 44, 63), stretched out in length, having a multipole electrode (31a, 32a, 33a, 34a) with more than two electrically excitable electrodes, for the creation of ribbon-shaped microformations (39a, 39b), whereby each electrode multipole is arranged along the stretched out length of the reaction chamber (39) always in a plane running perpendicular to the stretching of the chamber.

40. An arrangement according to claim 39, in which electrode assemblies (31, 32; 31, 33; 33, 34; 34, 32) in the submicrometer range are provided along the extended length of the reaction chamber (39) on at least two sides of it.

41. An arrangement according to claim 39 or claim 40, in which each of the electrode multipoles in the lined-up rows is a quadrapole

## Revendications

1. Procédé de façonnage de microparticules à partir de liquides, de gels ou de solides, dans lequel
- des électrodes (11a, 11b, 11c, 11d, 11e, 11f ; 31; 32, 33, 34 ; 42, 41 ; 61 ; 71, 72, 73, 74), qui peuvent être commandées individuellement ou en groupes et qui présentent une largeur, une hauteur et un écartement de l'ordre du micron, notamment dans la plage submicronique, sont disposées dans l'espace ;
- les électrodes constituent un espace de réaction (39, 44, 63), qui peut être rempli par un liquide ambiant (13, 39a) et elles peuvent être alimentées par des tensions électriques variables ;
- tandis que sont présents, dans le liquide ambiant (13, 39a), des petites particules (12, 21, 22, 23, 43, 62), des agrégats de particules (75) ou au moins une phase dispersée (39b), dont la permittivité relative et/ou la conductivité spécifique est ou sont inférieure(s), pour une excitation électrique choisie des électrodes, à celle(s) du liquide ambiant ;
- les forces exercées par les électrodes (11 ; 31 à 34 ; 41, 42 ; 61 ; 71 à 74) sur les particules, agrégats de particules ou sur la phase dispersée sont réglées de telle manière que les premières soient modifiées dans leur forme, "en suspension" dans le liquide ambiant, et qu'elles soient - notamment pendant l'excitation électrique des électrodes - réticulées, durcies ou stabilisées ou à forme fixée durablement, en tant qu'homo- ou hétéroagrégats.

2. Façonnage de microparticules selon la revendication 1, caractérisé en ce que le corps est stabilisé au moyen d'une réaction chimique, qui est notamment commandée dans le temps depuis l'extérieur, par l'intermédiaire d'une excitation optique, de l'addition de substances ou d'une électropolymérisation.

3. Façonnage de microparticules selon la revendication 1, caractérisé en ce que le corps est stabilisé au moyen d'une modification physique, telle que refroidissement ou cristallisation.

4. Façonnage de microparticules selon les revendications 1 à 3, caractérisé en ce que deux gouttelettes ou plus de compositions différentes peuvent réagir entre elles et permettre une stabilisation, à la manière d'un système à plusieurs constituants.

5. Façonnage de microparticules selon les revendications 1 à 4, caractérisé en ce que des microparticules similaires ou différentes sont façonnées en agrégats, sous une forme ordonnée ou non ordonnée dans le champ de forces de l'espace de réaction, et en ce qu'elles sont fixées quant à la forme.

6. Façonnage de microparticules selon l'une des revendications 1 à 5, caractérisé en ce que plusieurs particules sont constituées les unes à côté des autres, dans différentes cages de champ ou en ce qu'elles sont reliées entre elles par apport de matière, sous l'effet du champ.

7. Façonnage de microparticules selon l'une des revendications 1 à 6, caractérisé en ce qu'un champ électrique variable, c'est-à-dire également tournant - et notamment, des champs à haute fréquence dans le domaine des kHz, des MHz, des GHz - sont produits par les électrodes (11 ; 31 à 34 ; 41, 42 ; 61 ; 71 à 74).

8. Façonnage de microparticules selon l'une des revendications 1 à 7, caractérisé en ce que les électrodes ne sont que partiellement en contact avec les particules en suspension, la zone restante des électrodes étant recouverte par une couche isolante.

9. Façonnage de microparticules selon l'une des revendications 1 à 8, caractérisé en ce que les électrodes sont également recouvertes, dans la zone des cages, par une couche isolante ayant une épaisseur d'ordre submicronique ou micronique.

10. Façonnage de microparticules selon l'une des revendications 1 à 9, caractérisé en ce que quelques électrodes, ou toutes les électrodes (11 ; 31 à 34 ; 41; 42; 61 ; 71 à 74) sont des composants électroniques, tels que des transistors ou des diodes, ou bien sont commandées par de tels composants.

11. Façonnage de microparticules selon l'une des revendications 1 à 10, caractérisé en ce que l'agencement tridimensionnel des électrodes (11 ; 31 ; 41 ; 61 ; 71), un canal d'amenée et l'espace de réaction (39, 44, 63) sont fabriqués au moyen des technologies des structures à semi-conducteur.

12. Façonnage de microparticules selon l'une des revendications 1 à 11, caractérisé en ce que de la matière de composition identique ou différente est successivement fournie à l'espace de réaction (39, 44) et est ajoutée au corps déjà constitué et/ou stabilisé (21, 22, 23 ; 75), pour enrober celui-ci une ou plusieurs fois (51, 52, 53).

13. Façonnage de microparticules selon la revendication 12, caractérisé en ce que chaque fois, pendant ou après l'apport renouvelé de matière, la commande des électrodes est modifiée, si bien que la couche appliquée prend une forme enveloppante (52, 53) autre que la forme du corps de base (51).

14. Façonnage de microparticules selon l'une des revendications 1 à 13, caractérisé en ce que des solides, des gouttes, des cellules vivantes ou des cavités remplies de gaz sont insérés dans le corps de base (51) à façonner, ou bien adhèrent à sa surface.

15. Façonnage de microparticules selon l'une des revendications 1 à 14, caractérisé en ce que le corps façonné (12, 21 à 23 ; 39c, 39b) n'est que partiellement stabilisé, notamment superficiellement.

16. Façonnage de microparticules selon l'une des revendications 1 à 15, caractérisé en ce que l'on continue d'ajouter de la matière ou bien l'on commande les électrodes de telle manière que le corps façonné (75, 76) dépasse de l'espace de réaction (39, 44) proprement dit, qui est défini par les zones avant des électrodes (71 à 74).

17. Façonnage de microparticules selon l'une des revendications 1 à 16, caractérisé en ce que le corps façonné (12) n'est pas complètement stabilisé dans la zone des électrodes (11) afin que l'on puisse le retirer, par une déformation élastique et/ou plastique, de l'espace de réaction (13, 44) et qu'il soit, à l'extérieur, soumis à d'autres opérations, notamment à des stabilisations.

18. Façonnage de microparticules selon l'une des revendications 1 à 17, caractérisé en ce qu'une soufflure est enrobée et stabilisée par addition d'une phase supplémentaire.

19. Façonnage de microparticules selon l'une des revendications 1 à 18, dans lequel :
(a) des cellules vivantes, qui se répartissent et qui croissent dans la cage de champ, des cellules immobilisées ou mortes sont reliées en agrégats, de manière durable, par l'intermédiaire de liaisons de surface ; ou
(b) des cellules vivantes sont reliées en un agrégat de manière durable, avec une ou plusieurs phases supplémentaires, ou enrobées, l'enrobage étant notamment partiellement très mince, perméable aux particules les plus petites ou traversé par elles.

20. Façonnage de microparticules selon l'une des revendications 1 à 19, caractérisé en ce que l'on utilise des virus ou des macromolécules pour le façonnage d'agrégats, sous l'influence d'électrodes.

21. Utilisation de microparticules façonnées selon l'une des revendications 1 à 20, en tant qu'implant dans des bioréacteurs, dans des systèmes extracorporels ou pour la fabrication de préparations pharmacologiques retard.

22. Utilisation de microparticules façonnées selon l'une des revendications 1 à 20 pour la fabrication d'un système de dosage pharmacologique, notamment de microcomprimés ou de micropilules complets, ou d'éléments constitutifs de ceux-ci.

23. Utilisation de microparticules façonnées selon l'une des revendications 1 à 20, à partir de liquides, de gels, de solides ou de gaz, en tant que pigment.

24. Microparticule géométriquement façonnée, en forme de coquille ou compartimentée, obtenue par un procédé selon l'une des revendications 1 à 20, caractérisée en ce que la particule (23) est plus petite qu'une cellule du sang ou de taille identique à celle-ci, et dont la géométrie reproduit la forme d'un disque à empreintes au niveau des faces.

25. Procédé de façonnage de microparticules selon l'une des revendications 1 à 20, caractérisé en ce que le façonnage s'effectue dans des solutions ambiantes, qui sont liquides à des températures inférieures à 0 °C et supérieures à 100 °C.

26. Façonnage de microparticules selon l'une des revendications 1 à 20, 25, caractérisé en ce que les solutions ambiantes individuelles sont amenées dans l'espace de réaction (39, 44) et évacuées à partir de celui-ci, par l'intermédiaire de microcanaux.

27. Façonnage de microparticules selon l'une des revendications 1 à 20, 25, 26, caractérisé en ce qu'une chaîne de particules (39a, 39c) d'une longueur prédéfinissable est constituée dans un canal (39).

28. Procédé selon l'une des revendications 1 à 19, 25 à 27, dans lequel les microparticules sont façonnées de manière asymétrique ou évidée.

29. Procédé de façonnage de microparticules selon l'une des revendications 1 à 20, 25 à 28, caractérisé en ce que les particules façonnées sont déformées et/ou diélectriquement percées, pendant ou après le durcissement, par une ou plusieurs impulsions de champ, appliquée(s) par l'intermédiaire de deux électrodes ou davantage.

30. Façonnage de microparticules selon l'une des revendications 1 à 20, 25 à 29, caractérisé en ce que l'on utilise un liquide qui entre en séparation et/ou qui se décompose en diverses phases, seulement dans l'espace de réaction.

31. Façonnage de microparticules selon la revendication 30, caractérisé en ce que la ségrégation est produite par l'intermédiaire des électrodes, notamment par ultrasons ou par champs électriques.

32. Façonnage de microparticules selon l'une des revendications 1 à 20, 25 à 31, caractérisé en ce que le façonnage est effectué de manière intermittente ou en enfilade sous une pression augmentée ou réduite.

33. Façonnage de microparticules selon l'une des revendications 1 à 20, 25 à 32, caractérisé en ce qu'un corps façonné est amené à une masse définie par apport de matière, par enlèvement par corrosion ou par ablation.

34. Façonnage de microparticules selon l'une des revendications 1 à 20, 25 à 33, caractérisé en ce que le corps est encore déformé par des forces supplémentaires, par exemple par un flux de liquide.

35. Façonnage de microparticules selon l'une des revendications 1 à 20, 25 à 34, caractérisé en ce que le liquide ambiant est changé ou remplacé pendant le processus de façonnage et/ou le processus de stabilisation.

36. Façonnage de microparticules selon l'une des revendications 1 à 20, 25 à 35, caractérisé en ce que des particules façonnées et d'autres particules sont orientées, positionnées, agrégées et stabilisées sous une forme prédéfinie, par l'intermédiaire de l'excitation des électrodes.

37. Façonnage de microparticules selon l'une des revendications 1 à 20, 25 à 36, caractérisé en ce que
(a) une composante de tension continue est superposée aux signaux alternatifs des électrodes ;
(b) les signaux selon (a) sont temporairement coupés pendant le façonnage.

38. Façonnage de microparticules selon l'une des revendications 1 à 20, 25 à 37, caractérisé en ce que le corpuscule est amené à osciller, à partir de l'extérieur ou par l'excitation des électrodes, et en ce qu'il est stabilisé dans cet état.

39. Dispositif destiné au façonnage de microparticules selon l'une des revendications relatives au procédé, caractérisé par une chambre de réaction (13, 39, 44, 63) allongée et présentant plus de deux multipôles d'électrodes (31a, 32a, 33a, 34a) propres à être électriquement activés, pour l'élaboration de microproduits en bande (39a, 39b), les multipôles d'électrodes correspondant étant disposés, le long de la chambre de réaction (39) allongée, chaque fois dans un plan qui s'étend perpendiculairement à l'étendue de la chambre.

40. Dispositif selon la revendication 39, dans lequel il est prévu, le long de l'étendue de la chambre de réaction (39) allongée, sur au moins deux côtés de celle-ci, des ensembles d'électrodes (31, 32 ; 31, 33 ; 33, 34 ; 34, 32) d'ordre submicronique.

41. Dispositif selon la revendication 39 ou 40, dans lequel chacun des multipôles d'électrodes alignés est un quadripôle.
